# EUROPEAN PATENT APPLICATION

(11) **EP 3 832 568 A1**
(43) Date of publication of application: **09.06.2021**
(21) Application number: 20160767.8
(22) Date of filing: 03.03.2020
(51) Int. Cl.: G06Q 10/08

(54) **STOCK MANAGEMENT METHOD**

(71) Applicant: Rupp, Josef Jakob, 6911 Eichenberg (AT)
(72) Inventor: Rupp, Josef Jakob, 6911 Eichenberg (AT)
(74) Representative: Kieffer, Valentin

(57) **Abstract**

The present invention relates to a stock management method for a first stock of products stored in a storage facility (1). The stock management method involves keeping record of each product shipped from the first stock internal to storage facility (1) to at least one second stock internal to a household or office (2), and of each product leaving each second stock when it is discarded. Thus, an accurate and real-time inventory of the products available in each household or office 2 can be provided. Based on this inventory, future orders for products from the storage facility (1) can be anticipated for each household or office (2) and the first stock of products internal to the storage facility (1) is increased or reduced based on the anticipation of future orders.

## Description

### Field of the invention

The present invention relates to a stock management method for products in a storage facility.

### Background of the invention

Producers and product distributors usually strive to deliver a product to a consumer as quickly as possible as soon as an order is passed. Therefore, typical stock management methods for products in a storage facility involve stocking a sufficient number of units for each product on sale, so as to have them on hand and ready to be supplied immediately upon ordering. The higher the number of stored units for a certain product, the lower the risk of running out of stock in case of simultaneous orders for the same product. However, crowding a storage facility with a high number of units for each product on sale in anticipation of future potential orders leads not only to higher storage costs, but makes it also more difficult to deal with sudden surges in sales volumes and with seasonal variations in the nature of the ordered products. For example, the products ordered in summer may differ from those ordered in winter, and these seasonal variations can be further magnified in festive seasons, when sales volumes often increase dramatically.

### Summary of the invention

The main object of the present invention is to provide a stock management method for optimising the stock management of a storage facility. In particular, the new stock management method allows to decrease the total stock of products while ensuring that the required number of products is available in the storage facility just in time to avoid stock shortages.

Another object of the invention is to provide a stock management method allowing more flexibility in the amount and nature of the products stocked. In particular, the new stock management method allows to dynamically decrease the stock of certain products in order to free up storage space for other products while avoiding stock shortages for the products whose stocks have been decreased.

### Brief description of the drawings

- Figure 1: Storage facility and households or offices
- Figure 2: Waste disposal devices in each household or office communicating with storage facility via cloud system
- Figure 3: Waste disposal device
- Figure 4: Waste disposal devices with cloud system and remote device
- Figure 5: Waste disposal device with frame and lid
- Figure 6: Waste disposal device with frame, lid and signalling unit
- Figure 7: Simplified circuit diagram of the waste disposal device

This description and the accompanying drawings show exemplary embodiments of the invention. The invention, however, should not be interpreted as being limited to these particular embodiments. Variations of the embodiments can be made by those skilled in the art without departing from the scope of this invention as defined by the claims.

### Detailed Description of the Invention

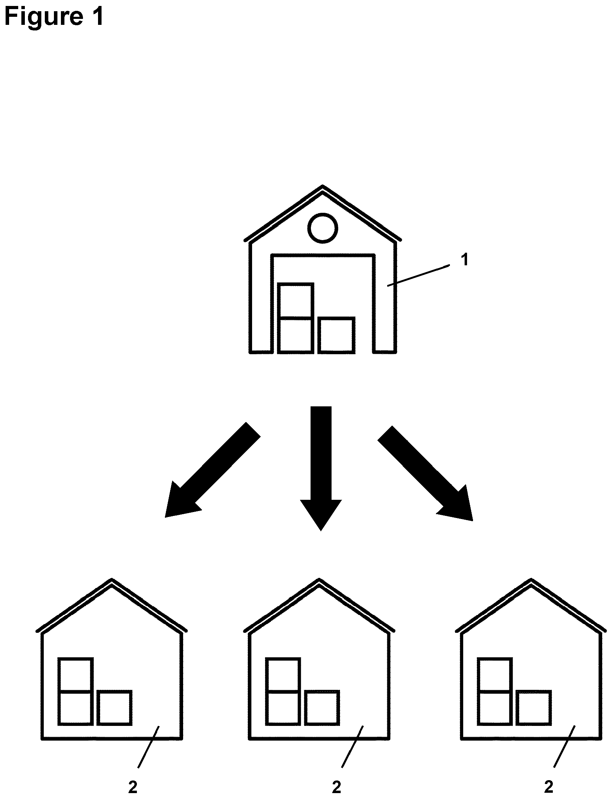

The present invention stems from the observation that between its production and its consumption, a product often goes through two successive and utterly uncoordinated stocks before and after being ordered by a consumer: a first stock of products in a storage facility 1 of a producer or distributor and a second stock of products in a consumer's household or office 2 (Figure 1). On the one hand, a consumer tends to stock a certain number of units of his favourite products in his household or office 2 in anticipation of his future needs. On the other hand, producers and product distributors also tend to stock several units for each product on sale in anticipation of future potential orders, so as to have them on hand and ready to be supplied immediately upon ordering. The reason for this is that producers and product distributors typically assume that a product is needed by a consumer at the moment he orders it. However, the moment when a product is really needed by the user is not the moment the product is ordered, but the moment it is effectively used or consumed. So, knowing exactly when one or several households or offices use/consume and discard a product, a new stock management method can be provided for optimising the stock management of a storage facility 1.

In the context of the invention, a first stock of products is stored in a storage facility 1 and one or more households or offices 2 each heave a second stock of products awaiting use or consumption. Each second stock is increased when products from the first stock are shipped to said second stock, and decreased when products from said second stock are discarded after use or consumption. The stock management method according to the invention involves keeping record of each product shipped from the first stock internal to storage facility 1 to each second stock internal to a household or office 2, and of each product leaving each second stock when it is discarded. Thus, an accurate and real-time inventory of the products available in each household or office 2 can be provided. Based on this inventory, future orders for products from the storage facility 1 can be anticipated for each household or office 2 and the first stock of products internal to the storage facility 1 is increased or reduced based on the anticipation of future orders.

For each household or office 2, an approximate date of a future order as well as the nature and approximate amount of the products likely to be ordered may be calculated knowing the current stock of products in said household or office 2 and a rate of consumption per unit of time for each product in said household or office 2. For each product, the rate of consumption may be inferred from the history of the products discarded in said household or office 2, e.g. on the nature and average number of products discarded per week, or on statistical estimation if no history is known. If the calculated date for the next order for a certain product is still several days, weeks or months away for a certain household or office 2, it can be assumed that this household or office 2 won't pass an order for this product within the next few days, weeks or months and vice versa. Adding up all the calculated order dates and amounts for a certain product for each household or office 2 affiliated to a storage facility 1 gives an estimation of how many units of this product should be available in the storage facility 1 at a given date, so as to have them on hand and ready to be shipped immediately upon ordering. So, the stock management method allows to reduce the stock for a certain product in the storage facility 1 if no order is anticipated for these products and only increase it just in time to meet the demand, for example by timely passing a reorder from the storage facility's own upstream supplier, thus saving storage costs.

Advantageously, the stock of a certain product in a storage facility 1 may be lowered in order to free up storage space for other products in the storage facility 1. This may be useful in festive periods for example, when storage facilities 1 are typically under great strain because of the high volume of orders. In order to decrease the stock of a certain product in the storage facility 1 for a certain period of time while avoiding stock shortages, the households or offices 2 which are likely to order this product in the next period of time can be identified, and all or part of the stock of said product may be pushed to these households or offices 2. This can be done by shipping said products to these households or offices 2 ahead of the calculated date for the next order and/or in larger amounts. In a possible embodiment of the invention, the identified households or offices 2 may be actively encouraged to order more products than they actually need or before they actually need them, and to stock them in their own household or office 2 awaiting use or consumption. For example, the identified households or offices 2 may be enticed to do so with special offers or discounts specific to these products and to these households.

In a further embodiment of the invention, a second stock internal to a selected household or office 2 may be regarded as an extension of the storage facility's first stock for specific products, e.g. for the specific products the selected household or office 2 is likely to order in the next few days, weeks or months. In this embodiment, the specific products shipped to the selected household or office's second stock are still owned by the storage facility 1 and are billed only when these products are use/consumed and discarded in the household or office 2, the payment being guaranteed by registering the user's credit card details. Alternatively, billing may also occur after a certain time period previously agreed upon (i.e. best-before date or any other expiration date). Since the selected household or office 2 does not need to pay for the specific products shipped to its second stock, the storage facility 1 can use storage space available in said second stock to stock specific products. The specific products can be shipped automatically at the initiative of the storage facility 1 in case a stock of a specific product in the storage facility 1 is to be lowered in order to free up storage space for other products. In a possible embodiment, the selected households or offices 2 are remunerated for storing the specific products in their second stock at a time when they are not needed yet for their own use/consumption. The possibility of pushing stocks to households or offices 2 and of deciding when this happens provides more flexibility to optimise the management of the first stock internal to the storage facility 1.

### Example:

A selected consumer always wishes to have at least 10 to 30 capsules of a specific coffee brand in his household's 2 second stock, but he can easily store up to 100 coffee capsules. As soon as they are less than 10 coffee capsules left in his household's second stock, 20 new coffee capsules are ordered. This usually happens every fortnight, as the consumer usually consumes around 20 coffees in a fortnight. Every fortnight, the selected consumer orders capsules of his specific coffee brand from the same storage facility 1, and happens to be the storage facility's 1 only consumer for this specific coffee brand. Thus, the storage facility 1 needs to have around 20 capsules of this specific coffee brand in stock every fortnight, so as to have them ready to be supplied immediately upon ordering. Approaching a festive season, the storage facility 1 needs to make room for high amounts of other products and won't be able to stock and provide for any coffee capsule of the specific brand in the next 2 months. Thus, the selected consumer being able to store up to 100 coffee capsules, next time he orders coffee, the storage facility 1 will ship 90 coffee capsules instead of 20, which will cover the selected consumer's consumption for the next 2 months and provide more storage space in the storage facility 1 during the same period.

As explained earlier in the description, the selected consumer may be encouraged to accept 90 coffee capsules at a time by making a special offer (e.g. selling the 90 coffee capsules for the price of 80), by remunerating him (e.g. by crediting a certain amount of points or money on his loyalty card), or simply by billing the coffee capsules only after they are consumed and discarded, or by any combination of these measures.

Of course, it will be understood that the logic described in this simple example is applicable to any number of products for any number of households or offices 2.

The stock management method described in the foregoing part of the description requires two inputs to optimise the stock management of a storage facility 1: a record of the products shipped from the storage facility 1 to the private household or offices 2 and a record of the products discarded within the private households or offices 2. While a storage facility 1 may easily keep record of which products were shipped to which households or offices 2, there is a need to provide a system allowing a storage facility 1 to keep record of products discarded within private households or offices 2. Thus, a waste disposal and product ordering system for the implementation of the stock management method will be described in the following part of the description.

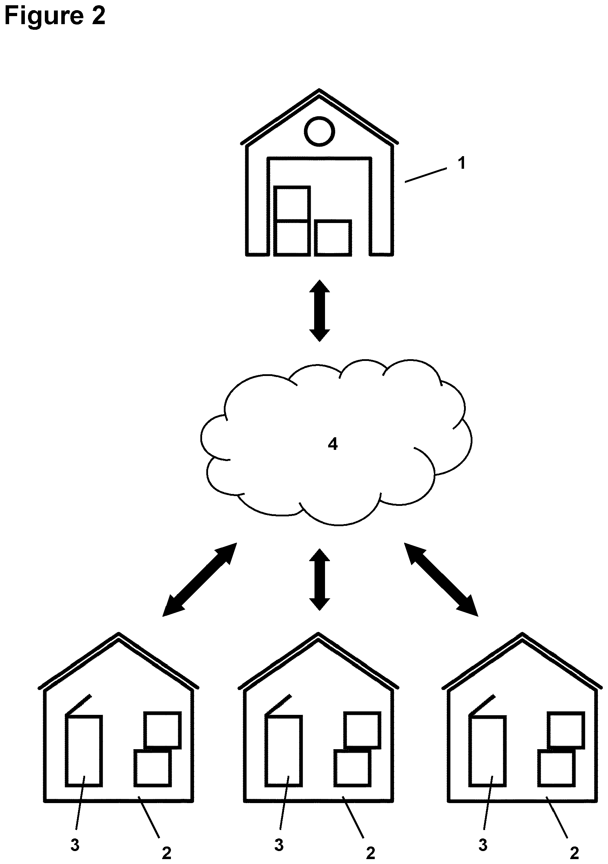

The waste disposal and product ordering system comprises at least one waste disposal device 3 such as a bin and a cloud system 4. Each waste disposal device 3 is located in a household or office 2 and detects products discarded in this household or office 2. The cloud system 4 allows information to be exchanged between each waste disposal device 3 and a storage facility 1 (Figure 2).

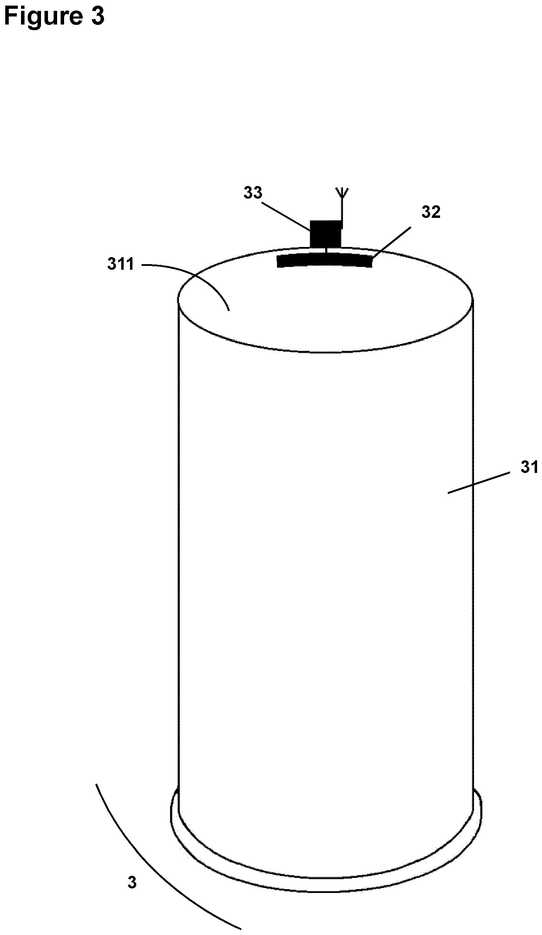

The waste disposal device 3 comprises a container 31 for disposal of a product provided with a RF (Radio Frequency) identification tag, a RF detection unit 32 attached to the container 31 for reading RF identification tags and a communication unit 33 (Figure 3). In the present description, a RF identification tag may use any radio frequency identification technology such as passive or active RFID, passive or active BLE (Bluetooth Low Energy), UWB (Ultra Wide Band) etc. Accordingly, a RF detection unit 32 may be any RF reading module adapted for automatically performing a RF scan and reading a RF identification tag. In the exemplary embodiment of figure 3, the RF detection unit 32 is arranged on the inner side of the container 31 next to the opening 311 so that products placed into the container 31 can be easily scanned by the RF detection unit 32 when they pass next to it. In other embodiments of the waste disposal device, the RF detection unit 32 may be arranged on any other location of the container 31 as long as its position allows a reliable RF scan of the products placed into the container 31. The communication unit 33 is adapted to establish a wireless connection with the cloud system 4 via a computer network such as the Internet and to send information acquired by the RF detection unit 32 from the RF identification tag of a product being placed into the waste disposal device, using for example Wi-Fi, Bluetooth, NFC, cellular 4G, 5G or above or any other Internet of Things connections such as Sigfox, LoRa or others.

Products placed into the waste disposal device 3 are any household or office goods or packaging thereof which are to be disposed of and enter the public domestic waste or recycling collection system because they are no longer of use or empty. Examples of household or office goods or packaging thereof which are routinely disposed of in typical households or offices 2 can be empty bottles for liquids, food packaging, worn toothbrushes, razors, broken dishware, printer cartridges etc. When a user throws a product provided with a RF identification tag into the waste disposal device 3, data stored electronically in the RF identification tag is automatically acquired by the RF detection unit 32. This data may contain information adapted to identify the exact product carrying the RF identification tag, e.g. the product code and its serial number (SGTIN).

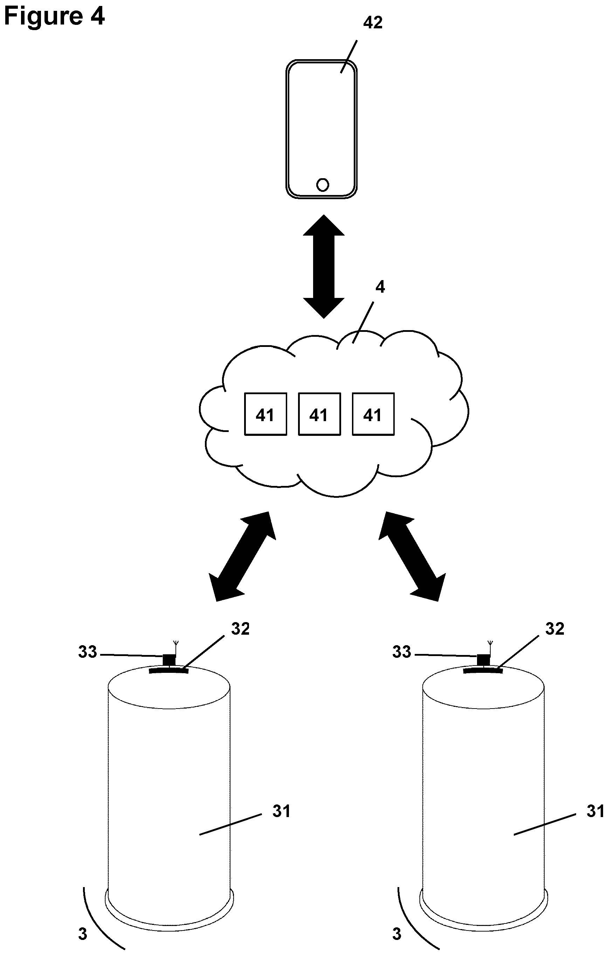

The cloud system 4 is adapted to receive information from the communication unit 33 of each waste disposal device 3 via wireless transmission, using for example Wi-Fi, Bluetooth, NFC, cellular 4G, 5G or above or any other Internet of Things connections such as Sigfox, LoRa or others. Every time a user throws a product provided with a RF identification tag into the container 31 of the waste disposal device, the RF detection unit 32 performs a RF scan, acquires data stored in the RF identification tag and the communication unit 33 sends this data to the cloud system 4. Preferably, each household or office 2 using the waste disposal system has a cloud system account 41 in the cloud system 4, in which this data received from the waste disposal device 3 is recorded. Preferably, a remote device 42 may be wirelessly connected to the cloud system 4 using for example Wi-Fi, Bluetooth, NFC, cellular 4G, 5G or above or any other Internet of Things connections such as Sigfox, LoRa or others (Figure 4). The remote device 42 allows a user registered to the household or office's cloud system account 41 to read and edit the information stored on the cloud system account 41 and to define its preferred account settings and parameters. Advantageously, the remote device 42 is a computer or a smartphone on which an application software adapted to communicate with the cloud system 4 is installed.

Several waste disposal devices 3 may be placed at different locations in a household or office 2 where products are typically used/consumed and thrown away. For example, in the context of a household 2, a first waste disposal device 3 may be placed in the kitchen, where most food products and packaging are discarded, and a second waste disposal device 3 may be placed in the bathroom, where health and beauty products are usually discarded. In the context of an office 2, a first waste disposal device 3 may be placed next to a coffee machine and further waste disposal devices 3 may be placed next to each individual desk. Another example includes waste disposal devices 3 for different kinds of waste, e.g. one for glass containers, one for plastics and one for metal objects, as is often required for waste separation. When a single household or office 2 has several waste disposal devices 3, the household or office's waste disposal devices 3 are all registered to the household or office's cloud system account 41.

In an advantageous embodiment of the invention, the waste disposal device 3 comprises an internal memory 38 and a CPU 39 (Central Processing Unit), e.g. an Arduino Board. The internal memory 38 is adapted to store information relating to the products thrown into the waste disposal device 3. This information is acquired by the RF detection unit 32 every time a product is placed into the waste disposal device 3 and recorded into the internal memory 38 by the CPU 39. Recording the information acquired by the RF detection unit 32 into the internal memory 38 is advantageous in case the wireless connection between the waste disposal device 3 and the cloud system 4 is interrupted. In this embodiment, the information stored in the cloud system 4 is synchronised with the information stored on the internal memory 38 of the waste disposal device 3 when the wireless connection between the waste disposal device 3 and the cloud system 4 is restored.

The cloud system 4 is adapted to connect to a storage facility 1 in which goods equipped with RF identification tags or shipped in packaging equipped with RF identification tags are stored, and to send data stored in the RF identification tag of a product being placed into the waste disposal device 3. This allows the storage facility 1 to keep record of products discarded within the household or office 2 and to implement the stock management method according to the invention.

In a possible embodiment of the waste disposal and product ordering system, the detection by the RF detection unit 32 of a product provided with an RF identification tag being placed into the waste disposal device 3 may also trigger an automatic order for a product stored in the storage facility 1. After registering onto the cloud system 4, a user may define in his household or office's cloud system account 41 his preferred ordering parameters for passing orders automatically from the storage facility 1. This is done advantageously via the remote device 42. Examples of ordering parameters to be defined by the user are: the kind of product to be ordered, the order level/quantity (how many products are to be ordered), the reorder point (when a new order is triggered), where the ordered products should be delivered, the payment method etc. The ordering parameters defined by the user may be specific to a certain product and/or specific to any product thrown into a certain waste disposal device 3 and/or identical for all orders with the same retailer/supplier and/or generally applicable to any order passed from the storage facility 1. Other criteria for specifying ordering parameters such as weight, size and price are also foreseen. For example, a user may choose to always order products identical to those discarded in the waste disposal device 3 (e.g. always his favourite coffee brand), or simply the most advantageous products at the time of order within a certain category of equivalent products (e.g. water, sugar) depending on the current price or if there are special deals. In another setting, the user may choose to have certain products delivered at is household or office 2 and others to be brought to a pick-up station. For example, a user may choose to pass orders automatically and immediately for certain products as soon as they are discarded into the waste disposal device 3, identified by the RF detection unit 32 and the corresponding information is received by the cloud system 4, e.g. for fresh food. For other products, e.g. non perishable products, the user may choose to pass bulk orders automatically as soon as a predefined number of products to be ordered is reached and/or on a regular basis after a predefined time period, e.g. every Monday or at the end of each month. This avoids passing multiple individual orders for products which may come from the same retailer and allows grouping in the same shipping unit. In another example, the user may choose to check the availability of the desired product before passing an order from the storage facility 1. In case the desired product is not available, the product may be back-ordered or a newer or alternative version of the product may be ordered automatically or suggested to the user for manual approval. In a further example, the user may choose to confirm each order manually, for example by selecting the desired products in a list accessible in his cloud system account 41 and corresponding to the products scanned by the RF detection unit 32. This way, the user has a clear overview of all the products consumed/used and discarded in his household or office 2 and can decide which products he wishes to order again or not.

In an advantageous embodiment of the waste disposal and product ordering system, the cloud system 4 does not only serve to pass on information or orders from the waste disposal devices 3 to the storage facility 1, but also has an inventory function. In this embodiment, the cloud system 4 keeps record of each product discarded into the household's or office's waste disposal device(s) 3 and of each product ordered from the storage facility 1. The cloud system 4 may also receive a notification from the storage facility 3 for each product effectively delivered to the household or office 2 after an order. Knowing this, the cloud system 4 can provide the user with an accurate and real-time inventory of the products available in his household or office 2. The user can also be provided with an overview of the products he discarded into the waste disposal device 3, which products will be ordered, when they will be ordered and when/where/how they will be delivered. All this information is accessible in the household or office's cloud system account 41, for example via the remote device 42.

The most important features of the waste disposal and product ordering system have been described in the foregoing part of the description. Particular exemplary embodiments of the waste disposal and product ordering system featuring optional improvements will be described in the following part of the descri ption.

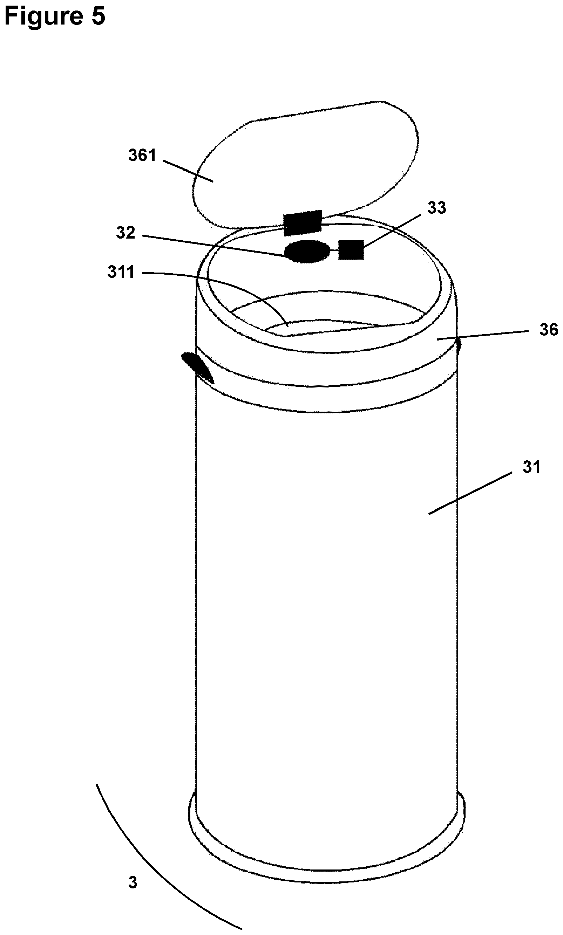

Rather than mounting the RF detection unit 32 and the communication unit 33 directly onto the container 31, the waste disposal device 3 may further comprise a frame 36 attached to the container 31, on which the RF detection unit 32 and the communication unit 33 are mounted (Figure 5). In the exemplary embodiment of figure 5, the container 31 has an opening 311 at its upper end through which products can be placed into the container 31. The frame 36 is removably attached on top of the container 31 around the opening 311 and carries a lid 361 adapted to open and close the waste disposal device. This is particularly advantageous for recycling goods, which are collected in specially marked containers or bags.

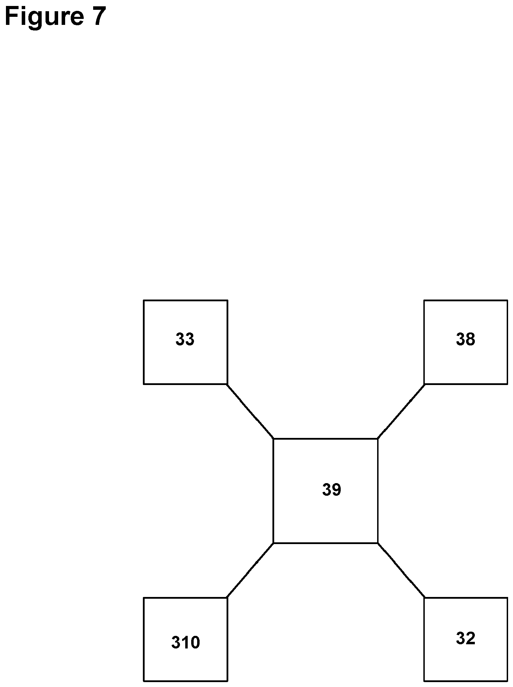

The waste disposal device 3 either includes a power source 310 which is either internal, e.g. an electric battery, or external, e.g. a cable connection to the electric mains. Advantageously, an electric battery may be coupled to solar cells arranged onto the container 31, the frame 36 or the lid 361. Figure 7 is an exemplary simplified circuit diagram of the waste disposal device 3 showing the RF detection unit 32, the communication unit 33, the internal memory 38 and the power source 310, all connected to the CPU 39.

In a possible embodiment of the waste disposal device, a first RF detection unit 32 is arranged on the outer side of the frame 36 and a second RF detection unit 32 is arranged on the inner side of the frame 36. This way, the lid 361 may open automatically when a product carrying a RF identification tag is about to be placed into the waste disposal device 3 and is detected by the first RF detection unit 32. The second RF detection unit 32 then makes a second reading to confirm the product detected by the first RF detection unit was then effectively discarded into the container 31.

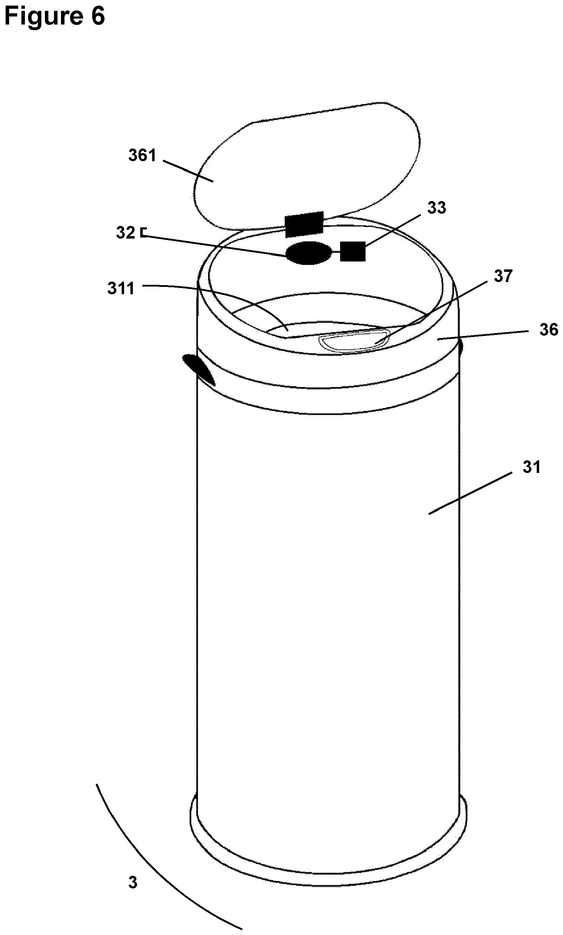

In a possible embodiment of the waste disposal device, a signalling unit 37 is mounted onto the frame 36 or onto the container 31 and adapted to display visual information to the user related the product placed into the waste disposal device 3 based on the information acquired from the RF identification tag (Figure 6). For example, the signalling unit 37 may be a display showing the name of the product placed into the container 31 and/or a confirmation that the RF scan has been completed successfully and/or the battery status and/or a failure notification, thus allowing the user to check the good operation of the waste disposal device 3. In another example, the signalling unit 37 may display a warning message in case a product has expired and its use/consumption may be dangerous or a health hazard.

In a possible embodiment of the invention, the internal memory 38 may store information related to a specific use intended for the waste disposal device. For example, as part of a waste sorting policy, a waste disposal device 3 may only be intended to contain certain type of products, e.g. only products made of paper or plastic or glass or metal, and this information is recorded in the internal memory 38. In another example, the waste disposal device 3 may only be intended for certain products, e.g. only for returnable bottles of a specific supplier. When a product is placed into the container 31, the CPU 39 is adapted to compare this information stored in the internal memory 38 with information about the material the product is made of stored in the product's RF identification tag. If no information about the material the product is made of is stored in the product's RF identification tag, the CPU 39 is adapted to use the serial number stored in the product's RF identification tag to query the storage facility 1 or another database via the cloud system 4, and the storage facility 1 or other database provides information about the material the product is made of. Then, the CPU 39 controls the a signalling unit 37 in order to display the result of this comparison to the user, the result being positive when the material of the product corresponds to the intended use recorded in the internal memory 38 and negative otherwise. The signalling unit 37 may be a display displaying a message and/or a plurality of LEDs showing green or red light and/or a buzzer emitting a warning if the wrong product is placed into the wrong waste disposal device 3. In an alternative embodiment of the invention, the waste disposal device 3 may comprise a mechanism controlled by the CPU 39 for automatically opening and/or locking the lid 361 depending on the result of the comparison of the information acquired by the RF detection unit 32 with the information recorded in the internal memory 38. In order to carry out the RF scan before the product is discarded into the container 31, the RF detection unit 32 is preferably arranged on the outer side of the frame 36 in this embodiment. This, way, the lid 361 opens automatically when the correct product is discarded in the correct waste disposal device 3 and/or is locked automatically when the user tries to discard the wrong product in the wrong waste disposal device 3. In this embodiment, a second RF detection unit 32 is preferably arranged on the inner side of the frame 36. This way, the second RF detection unit 32 then makes a second reading to confirm the product detected by the first RF detection unit was effectively discarded into the container 31.

In a possible embodiment of the invention, the waste disposal and product ordering system comprises means for avoiding reordering a product the user does not want to order again. For example, before the user throws a product into the waste disposal device 3, he may specify in his household or office's cloud system account 41 that he does not want to order this product again. In addition or instead, the waste disposal device 3 could be provided with a blocking mechanism which blocks the order of a product being placed into the waste disposal device 3. For example, the waste disposal device 3 may include a blocking button which, if pressed while throwing a product into the waste disposal device 3, prompts the transmittal of an information to the cloud system 4 or to the storage facility 1 that no order should be passed for this product. This information may even be recorded into the household or office's cloud system account 41 in order to block any subsequent order for this product, allowing further identical products to be placed into the waste disposal device 3 without need to activate the blocking mechanism to block the order.

In a possible embodiment of the invention, the remote device 42 is equipped with a remote RF detection unit, the remote RF detection unit being any RF reading module adapted for automatically performing a RF scan and reading a RF identification tag (NFC, passive UHF, BLE or others). This way, it is easy to make an inventory of the products equipped with a RF identification tag simply by waiving the remote device 42 at the products, automatically performing any necessary number of RF scans and gathering information stored on each RF identification tag within scanning reach. Information of inventoried products is passed wirelessly using for example Wi-Fi, Bluetooth, NFC, cellular 4G, 5G or above or any other Internet of Things connections such as Sigfox, LoRa or others to the cloud system 4 and the inventory levels stored in the household or office's cloud system account 41 and in the storage facility's own inventory are synchronised accordingly.

In a possible embodiment of the invention, in order to allow a user to order new products for the first time, the remote device 42 is adapted for passing orders from the storage facility 1 directly or via the cloud system 4 without first having to discard a product into the waste disposal device 3. When a user buys a product provided with a RF identification tag without using the cloud system 4, this product will not be recorded in the cloud system's 4 inventory. To correct this, this product can be identified uniquely by the RF scan performed by the waste disposal device 3 when it is placed into the container 31 or during inventory counts carried out by the user with the remote device 42 as described in the previous paragraph. Then, inventory levels recorded in the cloud system 4 are updated accordingly and obviously without billing the consumer for this additional product bought by the user independently from the present invention.

The present stock management method allows a considerable optimisation of a stock of products stored in a storage facility 1. An accurate and real-time inventory of the products available in customer's household or office 2 is provided. Based on this information, the household's or office's 2 future orders are anticipated and even influenced in order to optimise the stock management in a storage facility 1. A customer's household or office 2 may be regarded as an extension of the storage facility 1 and stocks can be pushed to the consumer in order to save storage space and costs. The waste disposal and product ordering system provided to implement the stock management method also allows a considerable improvement of a user's daily life by saving the time usually lost in physical or online shops for buying products routinely used/consumed in a private household or office. Many of these everyday household or office products are bought repeatedly by the user in the same quantity as soon as they are used/consumed in order to ensure that the household or office will not run short of these products. Therefore, the ordering process does not necessarily need human input and can be largely automated. The present waste disposal and ordering system knows which products are needed by the user's household or office, automatically orders them and has them delivered to the household or office 2, so that the user does not need to care about it and never ends up without his/her favourite product.

## Claims

1. Stock management method for a first stock of products stored in a storage facility (1),
one or more households or offices (2) having each a second stock of products awaiting use or consumption,
each said second stock being increased when products from the first stock are shipped to said second stock, and decreased when products from said second stock are discarded after use or consumption,
said stock management method comprising the following steps:
- for each second stock, keeping record of said products shipped to the second stock, and of said products discarded;
- for each second stock, providing an accurate and real-time inventory of the products available in said second stock;
- for each second stock, anticipating future orders for products from the first stock based on said inventory; and
- increasing or decreasing said first stock based on said anticipation of said future orders.

2. Stock management method according to claim 1,
further comprising
for a second stock, calculating the date of a future order and the nature and the amount of the products in said future order based on said inventory and on a product-specific rate of consumption per unit of time for said second stock.

3. Stock management method according to claim 2,
wherein
for a second stock, said product-specific rate of consumption is calculated based on a history of the products being discarded from said second stock.

4. Stock management method according to claim 2,
wherein
- for a certain product, the date of all future orders within a predefined period of time as well as the amount of said products in said future orders is calculated for each second stock;
- an estimation of the required amount of said certain product at a certain date in said first stock is obtained by adding up all future orders of all said second stocks for said product;
- the amount of said product in said first stock is temporarily increased or decreased based on said estimation of the required amount of said product.

5. Stock management method according to claim 2,
wherein
in order to free up storage space in said storage facility 1, the stock of a certain product in said first stock is decreased as follows:
- for said product, the date of all future orders within a predefined period of time as well as the amount of said product in said future orders is calculated for each second stock;
- the amount of said product shipped to a second stock at the calculated date of a future order is higher than said calculated amount at the calculated date and/or said calculated amount at said calculated date is shipped to said second stock before said calculated date.

6. Stock management method according to one of the preceding claims,
wherein
for a second stock, record of said products discarded is kept with a waste disposal and product ordering system comprising at least one waste disposal device (3) and a cloud system (4), each waste disposal device (3) being located in a household or office (2) and detecting products placed therein, and
the cloud system (4) sending information about the products detected by a waste disposal device (3) to the storage facility (1).

7. Stock management method according to claim 6,
wherein a product is:
- shipped from said first stock to a second stock of a household or office (2);
- detected when it is placed into a waste disposal device (3) located in said household or office (2) after use or consumption; and
- billed after being detected.

8. Stock management method according to claim 7,
wherein
said product is disposed of and enters a waste collection system upon emptying said waste disposal device (3).

9. Stock management method according to claim 6,
wherein a household or office (2) using the waste disposal and product ordering system has a cloud system account (41) in the cloud system (4), in which data received from the waste disposal device (3) is recorded, and wherein the waste disposal and product ordering system further comprises a remote device (42) adapted to wirelessly connect to said cloud system (4), allowing a user to read and edit information stored on said cloud system account (41).

10. Stock management method according to claim 6,
wherein
said waste disposal device (3) comprises a container (31) for disposal of a product equipped with a RF identification tag, a RF detection unit (32) attached to said container (31) for acquiring information stored in RF identification tags and a communication unit (33), said communication unit (33) being adapted to establish a wireless connection to said cloud system (4) and to send information obtained from said RF detection unit (32) to said storage facility (1).

11. Stock management method according to claim 10,
wherein
a signalling unit (37) is attached to said container (31) and adapted to display visual information related to a product placed into said waste disposal device (3), based on information acquired by said RF detection unit (2).

12. Stock management method according to claim 10,
the waste disposal device (3) further comprising an internal memory (38) and a CPU (39),
said CPU (39) being adapted to record information acquired by the RF detection unit (32) into said internal memory (38) every time a product is placed into said waste disposal device.

13. Stock management method according to claim 10,
the waste disposal device (3) further comprising an internal memory (38) and a CPU (39),
said internal memory (38) being adapted to store information related to a specific use intended for said waste disposal device,
the CPU (39) being adapted to compare said information stored in said internal memory (38) with information about the material a product is made of.

14. Stock management method according to claim 13
wherein
said CPU (39) is adapted to use a serial number stored in the RF identification tag of a product placed into said container (31) to query said storage facility (1) or another database via said cloud system (4), and to obtain from said storage facility (1) or other database information about the material said product is made of.

15. Stock management method according to claim 10,
wherein
a first product equipped with a RF identification tag is placed into a container (31) of said waste disposal device (3),
a RF detection unit (32) of said waste disposal device acquires information stored in said RF identification tag,
a communication unit (33) of said waste disposal device sends said acquired information to said cloud system (4) via wireless transmission, and
said cloud system (4) orders a second product equipped with a RF identification tag from said storage facility (1).

## Amended claims

### Amended claims in accordance with Rule 137(2) EPC.

1. Stock management method for a first physical stock of products stored in a storage facility (1),
one or more households or offices (2) having each a second physical stock of products awaiting use or consumption,
each said second physical stock being increased when products from the first physical stock are physically shipped to said second physical stock, and decreased when products from said second physical stock are physically discarded after use or consumption,
said stock management method comprising the following steps:
- for each second physical stock, keeping record of said products physically shipped to the second physical stock, and of said products physically discarded;
- for each second physical stock, providing an accurate and real-time inventory of the products physically available in said second physical stock;
- for each second physical stock, anticipating future orders for products from the first physical stock based on said inventory; and
- physically increasing or decreasing said first physical stock based on said anticipation of said future orders.

2. Stock management method according to claim 1,
further comprising
for a second physical stock, calculating the date of a future order and the nature and the amount of the products in said future order based on said inventory and on a product-specific rate of consumption per unit of time for said second physical stock.

3. Stock management method according to claim 2,
wherein
for a second physical stock, said product-specific rate of consumption is calculated based on a history of the products being physically discarded from said second physical stock.

4. Stock management method according to claim 2,
wherein
- for a certain product, the date of all future orders within a predefined period of time as well as the amount of said products in said future orders is calculated for each second physical stock;
- an estimation of the required amount of said certain product at a certain date in said first physical stock is obtained by adding up all future orders of all said second physical stocks for said product;
- the amount of said product in said first physical stock is temporarily physically increased or decreased based on said estimation of the required amount of said product.

5. Stock management method according to claim 2,
wherein
in order to free up storage space in said storage facility 1, the physical stock of a certain product in said first physical stock is decreased as follows:
- for said product, the date of all future orders within a predefined period of time as well as the amount of said product in said future orders is calculated for each second physical stock;
- the amount of said product physically shipped to a second physical stock at the calculated date of a future order is higher than said calculated amount at the calculated date and/or said calculated amount at said calculated date is physically shipped to said second physical stock before said calculated date.

6. Stock management method according to one of the preceding claims,
wherein
for a second physical stock, record of said products physically discarded is kept with a waste disposal and product ordering system comprising at least one waste disposal device (3) and a cloud system (4), each waste disposal device (3) being located in a household or office (2) and detecting products placed therein, and
the cloud system (4) sending information about the products detected by a waste disposal device (3) to the storage facility (1).

7. Stock management method according to claim 6,
wherein a product is:
- physically shipped from said first physical stock to a second physical stock of a household or office (2);
- detected when it is placed into a waste disposal device (3) located in said household or office (2) after use or consumption; and
- billed after being detected.

8. Stock management method according to claim 7,
wherein
said product is physically disposed of and enters a waste collection system upon emptying said waste disposal device (3).

9. Stock management method according to claim 6,
wherein a household or office (2) using the waste disposal and product ordering system has a cloud system account (41) in the cloud system (4), in which data received from the waste disposal device (3) is recorded, and wherein the waste disposal and product ordering system further comprises a remote device (42) adapted to wirelessly connect to said cloud system (4), allowing a user to read and edit information stored on said cloud system account (41).

10. Stock management method according to claim 6,
wherein
said waste disposal device (3) comprises a container (31) for disposal of a product equipped with a RF identification tag, a RF detection unit (32) attached to said container (31) for acquiring information stored in RF identification tags and a communication unit (33), said communication unit (33) being adapted to establish a wireless connection to said cloud system (4) and to send information obtained from said RF detection unit (32) to said storage facility (1).

11. Stock management method according to claim 10,
wherein
a signalling unit (37) is attached to said container (31) and adapted to display visual information related to a product placed into said waste disposal device (3), based on information acquired by said RF detection unit (2).

12. Stock management method according to claim 10,
the waste disposal device (3) further comprising an internal memory (38) and a CPU (39),
said CPU (39) being adapted to record information acquired by the RF detection unit (32) into said internal memory (38) every time a product is placed into said waste disposal device.

13. Stock management method according to claim 10,
the waste disposal device (3) further comprising an internal memory (38) and a CPU (39),
said internal memory (38) being adapted to store information related to a specific use intended for said waste disposal device,
the CPU (39) being adapted to compare said information stored in said internal memory (38) with information about the material a product is made of.

14. Stock management method according to claim 13
wherein
said CPU (39) is adapted to use a serial number stored in the RF identification tag of a product placed into said container (31) to query said storage facility (1) or another database via said cloud system (4), and to obtain from said storage facility (1) or other database information about the material said product is made of.

15. Stock management method according to claim 10,
wherein
a first product equipped with a RF identification tag is placed into a container (31) of said waste disposal device (3),
a RF detection unit (32) of said waste disposal device acquires information stored in said RF identification tag,
a communication unit (33) of said waste disposal device sends said acquired information to said cloud system (4) via wireless transmission, and
said cloud system (4) orders a second product equipped with a RF identification tag from said storage facility (1).
